Europäisches Patentamt

European Patent Office

Office européen des brevets

(19)

(11) **EP 0 570 326 B1**

(12) **EUROPEAN PATENT SPECIFICATION**

(45) Date of publication and mention
of the grant of the patent:
**29.01.1997 Bulletin 1997/05**

(51) Int Cl.⁶: **E03D 9/03**, G05D 11/00

(21) Application number: **93650018.0**

(22) Date of filing: **11.05.1993**

(54) **Liquid dispensing apparatus and method**

Flüssigkeitsabgabegerät und Verfahren

Appareil de distribution de liquide et méthode

(84) Designated Contracting States:
**AT BE CH DE DK ES FR GB GR IE IT LI NL PT SE**

(30) Priority: **12.05.1992 US 882169**

(43) Date of publication of application:
**18.11.1993 Bulletin 1993/46**

(73) Proprietor: **FLOW-RITE CONTROLS, LTD.**
**Grand Rapids Michigan 49548 (US)**

(72) Inventor: **Campau, Daniel N.**
**Grand Rapids, Michigan 49546 (US)**

(74) Representative: **Casey, Lindsay Joseph et al**
**F. R. Kelly & Co.**
**27 Clyde Road**
**Ballsbridge**
**Dublin 4 (IE)**

(56) References cited:
**FR-A- 2 613 743**      **US-A- 1 728 737**
**US-A- 4 507 811**

• **GB-A-N3485 (COX)**

## Description

The present invention is directed generally to a liquid dispensing apparatus and method and, more particularly, to a device and method capable of dispensing a controlled volume of an additive liquid into a reservoir liquid.

There are a variety of applications which require some form of device or apparatus that is capable of dispensing a first liquid into a second reservoir liquid. Examples of such applications include chemical processes, plating processes, fertilizer and food processing, and a wide variety of other liquid metering applications. One particularly desirable use of such a dispensing apparatus is to dispense a liquid cleaner into a toilet bowl.

Various prior art liquid dispensers have been widely used for dispensing liquid toilet bowl cleaner. The most commercially successful dispensing containers use a float valve which opens and closes with changes in the toilet tank level during a flush cycle. These dispensers are designed to fill a small receptacle on the top of a float during the fall in the tank water level and then, during the rise in tank water level, to displace the cleaner liquid from the receptacle and into the tank. Problems exist with this method and its implementation. For example, the method is very inefficient. The objective, of course, is to keep the toilet bowl clean, not the water holding tank. Since all the cleaner is dispensed into the tank, rather than the bowl, most of it is flushed down the drain without cleaning the bowl at all. Due to loss down the drain, less than 10% of the cleaner liquid actually is retained in the bowl. Even solid bowl cleaners, which slowly dissolve in the holding tank, share the same inefficient performance as the liquids, since 90% or more is flushed down the drain without doing any substantial cleaning. The prior art float dispenser apparatus are also susceptible to variations in performance. Surface tension, foaming, and dimensional variations can cause complete blockage of the system or great variations in the amount of cleaner dispensed. Because of the significant variation that occurs, it is also difficult to apply such apparatus to the dispensing of small volumes. Most liquid toilet bowl cleaners are formulated to be dispensed in one milliliter quantities. This requires a 12 oz. bottle to provide enough liquid for 350 flushes, or about one month's typical usage. The size of the 12 oz. (355ml) container is too large to fit in many toilet tanks limiting the use of the product.

Other prior art dispensing apparatus have been tried, but all are either incapable of dispensing accurately the small volume of liquid required, or they are incapable of dispensing during the time period required for most efficient operation. For example, U.S. Patent No. 1,728,737 to Stoner; U.S. Patent No. 1,213,978 to Thornton; U.K. Patent No. 8621; U.K. Patent No. GB-A-N3485 and GB-A-3485 A.D.1913 to Cox and French Patent 2,613,743 all disclose a container of liquid mounted above the tank level with a vent tube extending down below tank level. When the tank level is dropped, air is allowed to enter the container, enabling liquid additive to drain out of the container. These systems have proved impractical because they either dispensed too great a volume (e.g., the '978 Thornton, '621 Great Britain, '485 Great Britain and '743 French patents) and/or they dispensed at an inappropriate time in the flush cycle. This inefficiency was due to the necessary use in the prior art of a vent tube large enough in diameter to empty itself of water as the tank level dropped, thereby allowing air to enter the container through the vent tube. The large diameter vent tube results in a large dispensed volume of additive because water moving inside the vent tube displaces an equal volume of additive from the container. If the vent tube penetrates the tank level a substantial amount (for the purpose of delaying the onset of dispensing), this results in a relatively large volume of water inside the vent tube. If the vent tube is adjusted so that its lowest portion just contacts the water at its highest level, then dispensing begins immediately upon commencement of the flush cycle, wasting considerable additive. In either case, a dip tube vent approach is not satisfactory for dispensing a small controlled volume of liquid.

U.S. Patent No. 4,507,811 to Buelow, et al. recognized the improved efficiency made possible by dispensing additive into the overflow pipe rather than into the tank. However, the disadvantage of the Buelow device is that it requires toilet tank water to mix with the additive. In Buelow, solid cakes are dissolved to a saturated solution and dispensed in a pre-set amount. However, if a liquid additive, rather than a solid were used, the additive would be continually diluted with each flush. The Buelow device is therefore insufficiently accurate for dispensing small controlled volumes of liquid additives. The Buelow device also has the disadvantage that it must be mounted below the tank waterline. The Buelow dispenser is therefore impractical for use in many installations in which the flushing mechanism would interfere with the mounting of the Buelow device. The dissolving of solids has the inherent disadvantage of being time dependent. A second flush cycle may occur too fast to allow sufficient time for the solution to become saturated, thereby resulting in inadequate cleaner concentration in the bowl.

In still another prior art device, U.S. Patent No. 1,623,132 to Pennell, et al., the change in one reservoir level is used to control the dispensing of a liquid additive into the same reservoir. Pennell's device is complicated in that it uses an inverted U-tube as a level sensing tube in order to block air from entering the additive container. This U-tube is filled with liquid, allowing a pressure balance condition to develop to prevent liquid from draining out of the additive container. A disadvantage to the Pennell design is that the end of the U-tube is situated directly below the discharge nozzle so that when the container is inverted upon installation, the liquid discharged through the nozzle will fill the U-tube and establish the pressure balance. If the U-tube is not aligned with the nozzle, the entire contents of the container will run out. Thus, the Pennell device dispenses additive into the same reservoir as the controlling liquid, i.e., the tank, rather than into an overflow tank.

Overflow mounting is practical only if the container is very small. Since at least a one month's supply is needed in a practical toilet bowl cleaner cantainer, the amount dispensed each cycle must be very small. A practical overflow mounted dispenser is limited to about 3 ounces (88.8 ml) in volume. For a month's service, this requires a dispensed volume of about 0.25 ml per cycle, or about 5 drops of liquid. It is critical therefore that this small volume be dispensed at the proper time in the cycle, or it may fail to be adequately mixed with the bowl water. There is a fairly limited combination of dimensions that will dispense the proper amount at the right time. It has been determined that the dispensed volume and timing are significantly affected by the maximum water level, which can vary from one installation to another. It is desirable that these variations do not significantly affect the amount dispensed and it is desirable to have a container that does not need to be adjusted in any way upon installation.

There exists, therefore, a need in the art for a more efficient and effective apparatus and method for dispensing a small, accurately controlled volume of liquid into another liquid reservoir and particularly for dispensing a small volume of liquid toilet bowl cleaner directly into a toilet bowl. For greatest utility, such an apparatus must be small enough to be mounted directly onto the overflow pipe.

The present invention is directed to a novel apparatus and method for dispensing a small controlled volume of a first liquid into a second reservoir liquid reliably and efficiently. The invention as applied to liquid toilet bowl cleaner dispensing is directed to the use of a positive displacement pumping means, having no moving parts, for dispensing a small, controlled volume of additive into the overflow pipe without mixing the toilet tank refill water. In particular, the invention is directed to an apparatus as claimed in Claims 1-5 and to a method as claimed in Claims 6-11. The features of the preamble of claims 1 and 6 are known from patent document FR-A-2 613 743.

The liquid dispensing apparatus of the present invention includes a closed container adapted to hold a dispensable liquid, thereby defining a liquid level within the closed container; a dispensing nozzle having a discharge port, the nozzle being positioned on the closed container below the liquid level within the closed container; a reservoir adapted to hold a control liquid, the level of which is adapted to fall and rise in a periodic cycle between a low level and a high level, this periodic cycle resulting in the controlled discharge of the dispensable liquid from the dispensing nozzle; and a sensing tube terminating at a first open end positioned above the liquid level and within the closed container and at a second open end positioned in the reservoir, below the nozzle discharge port, and immersed in the control liquid when the control liquid is at its high level, the improvement comprising:

the second open end of the sensing tube being sized such that the surface tension of liquid within the second open end prevents the passage of air through the sensing tube, whereby the periodic fall and rise of the control liquid level between the low and high control liquid levels results in the controlled discharge of the dispensable liquid from the dispensing nozzle. The diameters of the second open end of the sensing tube and the discharge nozzle are selected such that a sufficient amount of surface tension develops so as to block air from entering the sensing tube and the discharge nozzle and to allow a balanced pressure condition to develop. Accordingly, the dispensable liquid is prevented from flowing whenever this balanced pressure condition exists.

The apparatus of the present invention finds particular application as a toilet bowl cleaner dispenser which automatically dispenses the cleaner and uses the change in water level within the tank to act as a power source to effect metered pumping of the toilet bowl cleaner. The unique use of surface tension to create the balanced pressure condition enables a very small, precise volume of cleaner liquid to be added at the most efficient point during the flush cycle, and also enables the liquid to be dispensed into the overflow without mixing with the tank refill water.

In addition, the cleaner may be dispensed into the overflow tube of the tank during the bowl refill portion of the tank level cycle.

In the present liquid dispensing apparatus air enters the container and the dispensable liquid leaves the container through the same discharge port without the need for squeezing and relaxing the container during use and without the need for moving parts, mechanical valves or inverted U-tubes.

In the present liquid dispensing apparatus the dispensable liquid is prevented from flowing from the container due to a balanced pressure condition which arises from the surface tension of the liquids involved.

In the present apparatus the sensing tube in communication with the liquid reservoir can be varied in shape or orientation to control the volume of liquid dispensed.

The present invention also relates to a method for controlling the dispensed volume of a first liquid having a first liquid level into a first reservoir containing a second liquid having a second liquid level, including the steps of providing a closed container adapted to hold the first liquid, the closed container having (i) a dispensing nozzle with a discharge port and (ii) a sensing tube with a first open end located within the closed container above the first liquid level and a second open end located outside the closed container and below the nozzle discharge port, locating the closed container above the second liquid level, and causing the second liquid level to rise and fall relative to the second open end of the sensing tube such that the second open end is below the second liquid level during at least a portion of the rise and fall cycle whereas the nozzle discharge port is always above the second liquid level, the improvement comprising the step of:

sizing the second open end of the sensing tube such that the surface tension of the second liquid within the second open end prevents the passage of air through the sensing tube into the closed container, to thereby dispense the first liquid from the closed container only as the second liquid level is rising.

The novel features which are characteristic of the present invention are set forth in the appended claims. However, the invention's preferred embodiments, together with further objects and attendant advantages, will be best understood by reference to the following detailed description taken in connection with the accompanying drawings and given by way of example only in which:

FIGURE 1 is a side elevational view, in partial cross-section, illustrating the apparatus of the present invention mounted to the overflow pipe within a toilet tank, and showing the toilet tank water at its high liquid level position;

FIGURE 2 is again a side elevational view, in partial cross-section, similar to that of FIGURE 1, but showing the toilet tank water at its low level position;

FIGURE 3 is a side elevational view, in partial cross-section, similar to FIGS. 1 and 2, but showing the toilet tank water liquid level rising; and

FIGURE 4 is a side elevational view, in schematic format, illustrating the apparatus of the present invention for use in dispensing an additive liquid into a reservoir.

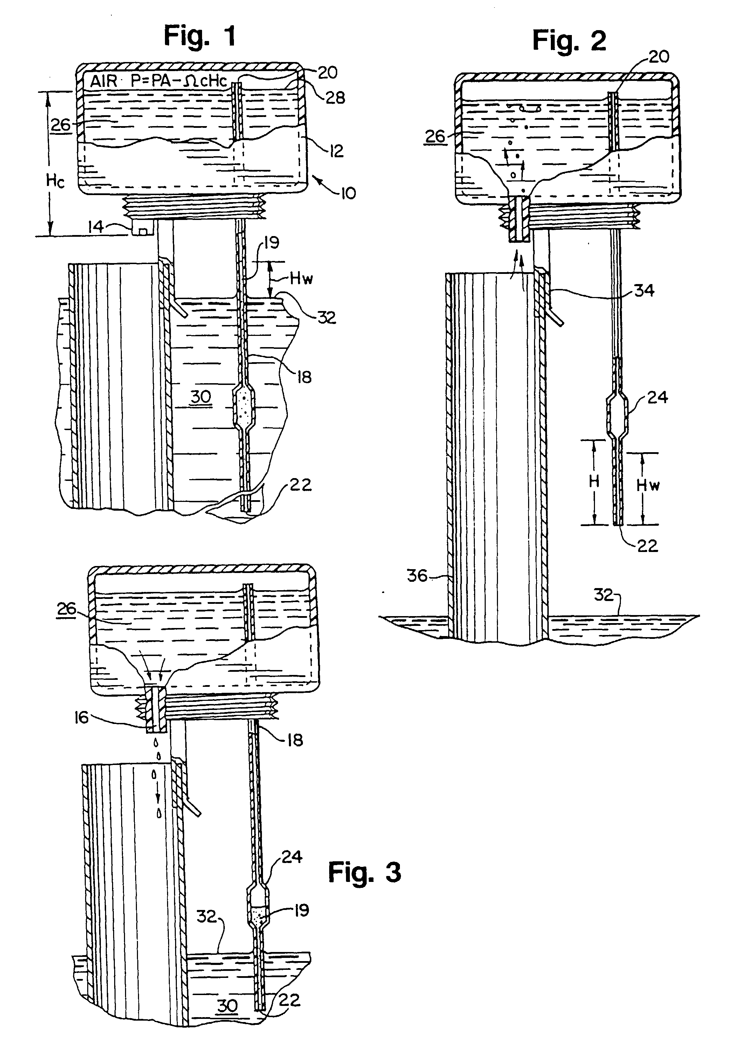

With reference now to FIGURE 1, the liquid dispensing apparatus of the present invention is illustrated and designated generally as 10. The dispensing apparatus 10 includes a generally rigid container 12 having a dispensing nozzle 14 and a sensing tube 18. The container 12 may be of any size, shape, or configuration suitable to act as a suitable receptacle for the dispensable liquid 26. Typically, the container 12 is manufactured from a moldable plastic material. The dispensing nozzle 14 is positioned on container 12 at a point below the level 28 of the dispensable liquid and includes at its distal end a discharge port 16. The sensing tube 18 includes a first open end 20 which is positioned within container 12 above the level 28 of dispensable liquid 26. The sensing tube 18 also includes a second open end 22 which is positioned outside of container 12 and at a vertical position below discharge port 16. As described in greater detail below, the sensing tube 18 also includes at least a portion of its length having an enlarged cross-section 24 which serves to insure that the proper amount of liquid is dispensed at the appropriate time during the dispensing operation.

When the container 12 is initially positioned as illustrated in FIGURE 1 with the dispensing nozzle 14 and sensing tube 18 depending from the container, some of the dispensable liquid 26 will drip from the nozzle until a balanced pressure condition develops within the container. This pressure condition may be defined by the following formula:

$$P = Pa - \Omega cHc$$

where Pa is the ambient pressure, $\Omega c$ is the weight density of the dispensable liquid 26, and Hc is the pressure head developed by the dispensable liquid. This balanced pressure condition prevents further dispensable liquid from running out of the container. The column of liquid, Hw, in the sensing tube 18 reaches an equilibrium height that corresponds to the height of the liquid in the container 12 according to the following formula:

$$Hw = (\Omega c/\Omega w)Hc$$

where $\Omega w$ is the weight density of reservoir liquid.

As the reservoir liquid level 32 begins to drop, the column of liquid 19 within the sensing tube also begins to drop through the sensing tube. As it drops, air is drawn into the top of the container 12 through nozzle 14. When the reservoir liquid 30 reaches its low level position which may be below the second open end 22 of the sensing tube, as illustrated in FIGURE 2, the column of liquid 19 does not completely drain from the sensing tube, also as shown in FIGURE 2. Rather, the column of liquid 19 remains trapped inside the sensing tube due to the negative pressure head at the top of the tube (inside the container) and due to the surface tension of the dispensable liquid at the dispensing nozzle 14 and due to the surface tension of the liquid at second open end 22. Of course, in keeping with the formula noted above, Hw decreases as the contents of the bottle are used up and Hc decreases. When the liquid level 28 in container 12, Hc is very low, surface tension at the nozzle 14 and at the second open end 22 governs the height of Hw. Preferably, the length of the sensing tube H, illustrated in FIGURE 2, is of a length greater than the maximum Hw so that the enlarged cross-sectional area of the sensing tube 24 always fills with air when the reservoir level 32 drops. This assures a consistent dispensed volume throughout many cycles of the dispensing operation.

As the reservoir liquid level 32 begins to rise, as illustrated in FIGURE 3, it in turn causes the liquid column 19 within sensing tube 18 to rise, thereby displacing air inside the sensing tube. Thus, air is forced from first open end 20 of sensing tube 18 into the upper portion of container 12, which in turn pushes the dispensable liquid 26 out the discharge port 16 of the dispensing nozzle 14.

An increase in the cross-sectional dimension of the sensing tube such as illustrated at bulge 24 can be used to control the amount and timing of the dispensed volume. The bulge 24 is best located below the lowest maximum reservoir liquid level 32 to assure proper dispensed volume. It is also desirable to have the bulge located as low as practical so that the dispensable liquid 26 has more time to mix with the bowl liquid.

Where the reservoir liquid level 32 has a maximum that can vary, it desirable to use a small diameter sensing tube with a bulge volume establishing the largest portion of dispensed volume.

Dimensions of the dispensing nozzle 14 in terms of its length and the internal diameter of discharge port 16, together with the length of sensing tube 18 and the internal diameter of the second open end 22, will vary depending upon the amount of liquid 26 to be dispensed, the rise and fall of the reservoir liquid level 32 and the surface tension of the dispensing liquid and reservoir liquids. As the surface tension of the dispensing liquid decreases, for example by the inclusion of surfactants, a smaller internal diameter for discharge port 16 may be necessary for a given volume of dispensed liquid 26 being discharged during the dispensing cycle.

The dispensing apparatus 10 of the present invention also can include a means for mounting the container 12 above the reservoir liquid, such as mounting clip 34 which can conveniently be attached to the uppermost end of a toilet tank overflow pipe 36. In this way, the dispensing nozzle 14 is positioned above the overflow pipe so that the dispensable liquid 26 is dropped directly into the overflow pipe 36 and thereby directly into the toilet bowl, without entering the main water tank. In this way, the cleaner is dispensed directly into the bowl in a more concentrated form and is not used as a part of the flushing liquid, which is primarily passed directly into the toilet drain. Accordingly, the present invention is much more efficient in its use of cleaner.

The present invention facilitates the effective use of an overflow mounting by using a sensing tube with a low sensitivity to level change (i.e., a diameter that results in a small change in dispensed volume given a change in tank level). A tube diameter of 0.06 inches (1.52mm), for example, results in a displacement of 0.046 ml of additive per inch (25.4mm) of water lever change, or about one drop per inch (25.4mm). Setting the nominal dispensing rate at 5 drops per cycle for a maximum tank level 1 inch (25.4mm) below the overflow will yield an installation variation of +/- 1 drop for the range of maximum tank level settings between the top of the overflow to 2 inches (50.8mn) below. Thus, for this sensing tube diameter, the controlled volume for a given installation will be 4 to 6 drops with a standard deviation of less than one drop.

It is desirable to discharge the cleaner early in the bowl refill cycle (after all drain-off has occurred). This means the sensing tube must extend well down below the maximum tank water level. The dispensing of a small volume of liquid additive therefore requires a small diameter sensing tube. A further advantage is obtained by enlarging the diameter of a portion of the sensing tube to increase the volume dispensed while the tank level is low, and using a reduced tube diameter above the enlarged region to reduce the dispensing rate as the level rises. This smaller diameter must extend well above the maximum level of the tank water because the liquid in the sensing tube rises above the tank level as the balanced pressure condition is reestablished.

Further, the nozzle discharge port and the external opening in the sensing tube must each be sized so as to allow surface tension to develop to prevent liquid from draining out either port. However, if these openings are too small, the dispensing flow may become too slow for optimum timing. It has been determined that for typical toilet bowl cleaning liquids, a diameter of 0.125 inch (3.175 mm) for the discharge nozzle and 0.06 inch (1.52 mm) for the external opening of the sensing tube function well.

More specifically, it has been determined that with the end of the sensing tube extending to a point 3 inches below the maximum water level, the nominal dispensing volume can be set to 5 drops per cycle. If the maximum tank level is 1 inch below the overflow, then the dispensed volume will vary +/- 1 drop for the range of maximum tank level settings between the top of the overflow to 2 inches (50.8 mm) below. Thus, for a diameter of 0.125 inch (3.175 mm) for the discharge nozzle and 0.06 inch (1.52 mm) for the external opening of the sensing tube, the controlled volume for a given installation will be 4 to 6 drops with a standard deviation of less than one drop. Proper performance requires that the sensing tube retain liquid by surface tension. When first inverted, the sensing tube contains container liquid. After a number of cycles, this liquid is displaced by water. In both cases, surface tension must be adequate to block air from entering the sensing tube. Water has a surface tension of 0.005 lb./ft. (7.44 x $10^{-3}$ kg/m). Cleaning liquids typically have a much lower surface tension than water (due to the presence of surfactants). The surface tension of the cleaning liquid therefore dictates the maximum diameter of the end of the sensing tube. It has been found preferable to use a small diameter sensing tube, on the order of 0.06 in. (1.52mm), to assure retention of liquid and to prevent any air from being pushed into the tube as the level rises and contacts the end of the sensing tube.

It should now be understood that the surface tension at the discharge nozzle and at the external opening of the sensing tube assure that air entry is blocked when the tank level drops below the end of the sensing tube, thus giving rise to a balanced pressure condition to block the discharge of liquid. Surface tension is also necessary at both ports when the container is first inverted and installed. It limits the discharge of liquid to a very small amount as the pressure balance condition develops.

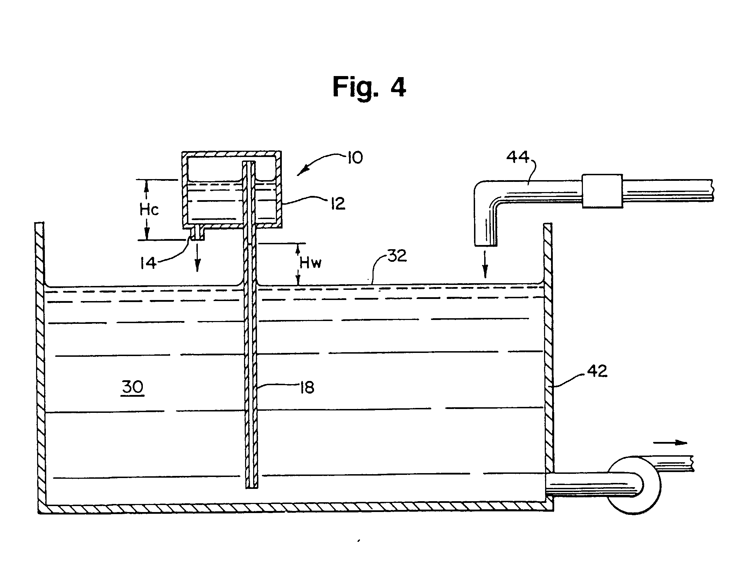

FIGURE 4 is a schematic representation of the present invention showing its general application for providing a dispensable or additive liquid 26 to be mixed with a reservoir liquid 30. In accordance with this general application, the mixture of additive liquid 26 and reservoir liquid 30 is used in a predetermined processing application wherein over time the liquid level 32 falls within tank 42. When the reservoir liquid is replenished using refill system 44, the reservoir liquid level 32 rises and additive liquid 26 is dispensed via dispensing nozzle 14 into the reservoir liquid in the same manner as described previously. One of ordinary skill in the art will appreciate that a plurality of dispensing apparatus 10 can be used to provide several different additive liquids to tank 42 each being dispensed in its own relative proportion to the change in reservoir liquid level 32.

Those skilled in the art will also appreciate that by changing the cross-sectional dimension of sensing tube 18 along its length, the volume of liquid dispensed as the reservoir liquid level rises will change. Thus, by adjusting the cross-sectional dimension of the sensing tube 18, and knowing the predetermined rise of reservoir liquid level, the precise volume of dispensed liquid added to the reservoir liquid can be tailored for any given application.

**Claims**

1. A liquid dispensing apparatus including a closed container (12) adapted to hold a dispensable liquid (26), thereby defining a liquid level (28) within the closed container (12); a dispensing nozzle (14) having a discharge port (16), the nozzle (14) being positioned on the closed container (12) below the liquid level (28) within the closed container; a reservoir (42) adapted to hold a control liquid (30), the level of which is adapted to fall and rise in a periodic cycle between a low level and a high level, this periodic cycle resulting in the controlled discharge of the dispensable liquid (26) from the dispensing nozzle (14); and a sensing tube (18) terminating at a first open end positioned above the liquid level (28) and within the closed container (12) and at a second open end (22) positioned in the reservoir (42), below the nozzle discharge port (16), and immersed in the control liquid (32) when the control liquid (32) is at its high level, characterized by the second open end (22) of the sensing tube (18) being sized such that the surface tension of liquid within the second open end (22) prevents the passage of air through the sensing tube (18), whereby the periodic fall and rise of the control liquid level (32) between the low and high control liquid levels results in the controlled discharge of the dispensable liquid (26) from the dispensing nozzle (14).

2. An apparatus as claimed in Claim 1, further comprising:
   an overflow pipe (36) located within the reservoir (42) and positioned so that the output from the dispensing nozzle (14) is in fluid communication with the control liquid from the overflow pipe (36).

3. An apparatus as claimed in Claim 1 or Claim 2 wherein the sensing tube (18) has an enlarged cross-section (24) along at least a portion of its length, the enlarged cross-section portion (24) of the sensing tube (18) being positioned above the low control liquid level and at least partially below the high control liquid level.

4. An apparatus as claimed in any of Claims 1-3 wherein the sensing tube enlarged cross-section portion (24) terminates at a lower end which is positioned above any control liquid (30) retained in the sensing tube (18) when the control liquid (30) is at its low level.

5. An apparatus as claimed in any of Claims 2-4 wherein the closed container (12) includes a mounting bracket to support the closed container (12) on the overflow pipe (36) within the reservoir (42).

6. A method for controlling the dispensed volume of a first liquid (26) having a first liquid level (28) into a first reservoir (42) containing a second liquid (32) having a second liquid level (32), including the steps of providing a closed container (12) adapted to hold the first liquid (26), the closed container (12) having (i) a dispensing nozzle (14) with a discharge port (16) and (ii) a sensing tube (18) with a first open end (20) located within the closed container (12) above the first liquid level (28) and a second open end (22) located outside the closed container (12) and below the nozzle discharge port (16), locating the closed container (12) above the second liquid level (32), and causing the second liquid level (32) to rise and fall relative to the second open end (22) of the sensing tube (18) such that the second open end (22) is below the second liquid level (32) during at least a portion of the rise and fall cycle whereas the nozzle discharge port (16) is always above the second liquid level (32), characterized by the step of:
   sizing the second open end (22) of the sensing tube (18) such that the surface tension of the second liquid (32) within the second open end (22) prevents the passage of air through the sensing tube (18) into the closed container (12), to thereby dispense the first liquid (26) from the closed container (12) only as the second liquid level (32) is rising.

7. A method as claimed in Claim 6 wherein the first liquid (26) is discharged from the closed container (12) through the dispensing nozzle (14) as the second liquid level (32) is rising and air is drawn into the closed container (12) through the dispensing nozzle (14) as the second liquid level (32) is falling.

8. A method as claimed in Claim 6 or Claim 7 wherein the first liquid (26) is dispensed into the second liquid (32) in an amount that is proportional to the rise of the second liquid level (32) above the second open end (22) of the sensing tube (18).

9. A method as claimed in any of Claims 6-8 wherein the first liquid (26) is dispensed into a second reservoir in an amount that is proportional to the rise of the second liquid level (32) above the second open end (22) of the sensing tube (18), whereby no mixing of the first and second liquids (26, 32) occurs.

10. A method as claimed in any of Claims 6-9 wherein the level (32) of the second liquid (30) undergoes cyclical rises and falls and the first liquid (26) is dispensed at a generally constant rate during the cyclical rises and falls and independent of the level (28) of the first liquid (26) in the closed container (12).

11. A method as claimed in any of Claims 6-10 wherein the first liquid (26) is dispensed through an overflow pipe (36) within the first reservoir (42) and into a second reservoir without dilution by the second liquid (32) contained in the first reservoir (42).

**Patentansprüche**

1. Flüssigkeitsausgabevorrichtung, die einen geschlossenen Behälter (12), der zur Aufnahme einer ausgebbaren Flüssigkeit (26) ausgeführt ist, wodurch innerhalb des geschlossenen Behälters (12) ein Flüssigkeitspegel (28) definiert wird; eine Ausgabedüse (14) mit einer Ausflußöffnung (16), wobei die Düse (14) unter dem Flüssigkeitspegel (28) in dem geschlossenen Behälter am geschlossenen Behälter (12) positioniert ist; einen Vorratsbehälter (42), der zur Aufnahme einer Steuerflüssigkeit (30) ausgeführt ist, deren Pegel zum Fallen und Ansteigen in einem periodischen Zyklus zwischen einem niedrigen Pegel und einem hohen Pegel angepaßt ist, wobei dieser periodische Zyklus das geregelte Ablassen der ausgebbaren Flüssigkeit (26) aus der Ausgabedüse (14) bewirkt; und ein Fühlrohr (18) aufweist, das an einem ersten offenen, über dem Flüssigkeitspegel (28) und in dem geschlossenen Behälter (12) positionierten Ende und an einem zweiten offenen, im Vorratsbehälter (42) unter der Düsenausflußöffnung (16) positionierten und, wenn die Steuerflüssigkeit (32) auf ihrem hohen Pegel liegt, in die Steuerflüssigkeit (32) eingetauchten Ende (22) endet, gekennzeichnet dadurch, daß das zweite offene Ende (22) des Fühlrohrs (18) größenmäßig so ausgeführt ist, daß die Oberflächenspannung der Flüssigkeit im zweiten offenen Ende (22) das Passieren von Luft durch das Fühlrohr (18) verhindert, wodurch das periodische Fallen und Ansteigen des Steuerflüssigkeitspegels (32) zwischen dem niedrigen und dem hohen Steuerflüssigkeitspegel das geregelte Ablassen der ausgebbaren Flüssigkeit (26) aus der Ausgabedüse (14) bewirkt.

2. Vorrichtung nach Anspruch 1, ferner umfassend ein Überlaufrohr (36), das in dem Vorratsbehälter (42) angeordnet und so positioniert ist, daß die Ausgabe aus der Ausgabedüse (14) in Fluidkommunikation mit der Steuerflüssigkeit aus dem Überlaufrohr (36) steht.

3. Vorrichtung nach Anspruch 1 oder 2, wobei das Fühlrohr (18) zumindest entlang einem Abschnitt seiner Länge einen vergrößerten Querschnitt (24) hat, wobei der Abschnitt mit vergrößertem Querschnitt (24) des Fühlrohrs (18) über dem niedrigen Steuerflüssigkeitspegel und zumindest teilweise unter dem hohen Steuerflüssigkeitspegel positioniert ist.

4. Vorrichtung nach einem der Ansprüche 1 bis 3, wobei der Abschnitt mit vergrößertem Querschnitt (24) des Fühlrohrs an einem unteren Ende endet, welches über jeder Steuerflüssigkeit (30) positioniert ist, die im Fühlrohr (18) zurückbehalten wird, wenn die Steuerflüssigkeit (30) auf ihrem niedrigen Pegel liegt.

5. Vorrichtung nach einem der Ansprüche 2 bis 4, wobei der geschlossene Behälter (12) eine Halterung zum Stützen des geschlossenen Behälters (12) auf dem Überlaufrohr (36) in dem Vorratsbehälter (42) aufweist.

6. Verfahren zum Regeln des ausgegebenen Volumens einer ersten Flüssigkeit (26) mit einem ersten Flüssigkeitspegel (28) in einen ersten Vorratsbehälter (42), der eine zweite Flüssigkeit (32) mit einem zweiten Flüssigkeitspegel (32) enthält, das die folgenden Schritte aufweist: Vorsehen eines geschlossenen Behälters (12), der zur Aufnahme einer ersten Flüssigkeit (26) ausgeführt ist, wobei der geschlossene Behälter (12) (i) eine Ausgabedüse (14) mit einer Ausflußöffnung (16) und (ii) ein Fühlrohr (18) mit einem ersten offenen, in dem geschlossenen Behälter (12) über dem ersten Flüssigkeitspegel (28) angeordneten Ende (20) und einem zweiten offenen, außerhalb des geschlossenen Behälters (12) und unter der Düsenausflußöffnung (16) angeordneten Ende (22), Anordnen des geschlossenen Behälters (12) über dem zweiten Flüssigkeitspegel (32) und Bewirken des Ansteigens und Fallens des zweiten Flüssigkeitspegels (32) im Verhältnis zu dem zweiten offenen Ende (22) des Fühlrohrs (18), so daß das zweite offene Ende (22) während zumindest einem Teil des Anstiegund Abfallzyklus unter dem zweiten Flüssigkeitspegel (32) liegt, wohingegen die Düsenausflußöffnung (16) immer über dem zweiten Flüssigkeitspegel (32) liegt, gekennzeichnet durch den Schritt, bei dem das zweite offene Ende (22) des Fühlrohrs (18) größenmäßig so ausgeführt wird, daß die Oberflächenspannung der zweiten Flüssigkeit (32) innerhalb des zweiten offenen Endes (22) das Passieren von Luft durch das Fühlrohr (18) in den geschlossenen Behälter (12) verhindert, um dadurch die erste Flüssigkeit (26) nur beim Ansteigen des zweiten Flüssigkeitspegels (32) aus dem geschlossenen Behälter (12) abzugeben.

7. Verfahren nach Anspruch 6, wobei beim Ansteigen des zweiten Flüssigkeitspegels (32) die erste Flüssigkeit (26) durch die Ausgabedüse (14) aus dem geschlossenen Behälter (12) abgelassen wird und beim Abfallen des zweiten Flüssigkeitspegels (32) Luft durch die Ausgabedüse (14) in den geschlossenen Behälter (12) gesaugt wird.

8. Verfahren nach Anspruch 6 oder 7, wobei die erste Flüssigkeit (26) in einer Menge, die zum Anstieg des zweiten Flüssigkeitspegels (32) über das zweite offene Ende (22) des Fühlrohrs (18) proportional ist, in die zweite Flüssigkeit (32) ausgegeben wird.

9. Verfahren nach einem der Ansprüche 6 bis 8, wobei die erste Flüssigkeit (26) in einer Menge, die zum Anstieg des zweiten Flüssigkeitspegels (32) über das zweite offene Ende (22) des Fühlrohrs (18) proportional ist, in einen zweiten Vorratsbehälter ausgegeben wird, wodurch es nicht zu einem Vermischen der ersten und zweiten Flüssigkeit (26, 32) kommt.

10. Verfahren nach einem der Ansprüche 6 bis 9, wobei der Pegel (32) der zweiten Flüssigkeit (30) zyklische Anstiege und Abfälle durchläuft und die erste Flüssigkeit (26) während der zyklischen Anstiege und Abfälle und unabhängig vom Pegel (28) der ersten Flüssigkeit (26) im geschlossenen Behälter (12) in einer allgemein konstanten Rate ausgegeben wird.

11. Verfahren nach einem der Ansprüche 6 bis 10, wobei die erste Flüssigkeit (26) durch ein Überlaufrohr (36) in dem ersten Vorratsbehälter (42) und in einen zweiten Vorratsbehälter abgegeben wird, ohne durch die im ersten Vorratsbehälter (42) enthaltene zweite Flüssigkeit (32) verdünnt zu werden.

## Revendications

1. Dispositif de distribution de liquide comportant un récipient fermé (12) adapté pour contenir un liquide à distribuer (26), définissant ainsi un niveau de liquide (28) à l'intérieur du récipient fermé (12); un ajutage de distribution (14) ayant un orifice de décharge (16), l'ajutage (14) étant positionné sur le récipient fermé (12) en dessous du niveau du liquide (28) à l'intérieur du récipient fermé; un réservoir (42) adapté pour contenir un liquide de contrôle (30) dont le niveau est adapté pour monter et descendre selon un cycle périodique entre un niveau bas et un niveau haut, ce cycle périodique résultant en une décharge contrôlée du liquide à distribuer (26) à partir de l'ajutage de distribution (14); et un tube de détection (18) se terminant à une première extrémité ouverte positionnée au-dessus du niveau de liquide (28) et à l'intérieur du récipient fermé (12) et à une deuxième extrémité ouverte (22) positionnée dans le réservoir (42), en dessous de l'orifice de décharge d'ajutage (16), et immergé dans le liquide de contrôle (32) quand le liquide de contrôle (32) est à son niveau haut, caractérisé par

la deuxième extrémité ouverte (22) du tube de détection (18) étant dimensionnée de telle sorte que la tension de surface du liquide à l'intérieur de la deuxième extrémité ouverte (22) empêche le passage de l'air à travers le tube de détection (18), si bien que la montée et la descente périodiques du niveau du liquide de contrôle (32) entre les niveaux bas et haut du liquide de contrôle entraîne la décharge contrôlée du liquide à distribuer (26) à partir de l'ajutage de distribution (14).

2. Appareil tel que revendiqué à la revendication 1, comprenant en outre:

un tuyau de débordement (36) situé à l'intérieur du réservoir (42) et positionné de telle sorte que la sortie de l'ajutage de distribution (14) soit en communication fluide avec le liquide de contrôle provenant du tuyau de débordement (36).

3. Appareil tel que revendiqué à la revendication 1 ou la revendication 2, dans lequel le tube de détection (18) a une section transversale agrandie (24) le long d'au moins une partie de sa longueur, la partie de section transversale agrandie (24) du tube de détection (18) étant positionnée au-dessus du niveau bas du liquide de contrôle et au moins partiellement au-dessous du niveau haut du liquide de contrôle.

4. Appareil tel que revendiqué dans l'une quelconque des revendications 1 à 3, dans lequel la partie en coupe transversale agrandie (24) du tube de détection se termine à une extrémité inférieure qui est positionnée au-dessus de tout liquide de contrôle (30) retenu dans le tube de détection (18) quand le liquide de contrôle (30) est à son niveau bas.

5. Appareil tel que revendiqué dans l'une quelconque des revendications 2 à 4, dans lequel le récipient fermé (12) comporte un support de montage pour supporter le récipient fermé (12) sur le tuyau de débordement (36) à l'intérieur du réservoir (42).

6. Méthode de contrôle du volume distribué d'un premier liquide (26) ayant un niveau de premier liquide (28) dans un premier réservoir (42) contenant un deuxième liquide (32) ayant un niveau de deuxième liquide (32), comportant les étapes de fourniture d'un récipient fermé (12) adapté pour contenir le premier liquide (26), le récipient fermé (12) ayant (i) un ajutage de distribution (14) avec un orifice de décharge (16) et (ii) un tube de détection (18) avec une première extrémité ouverte (20) située à l'intérieur du récipient fermé (12) au-dessus du niveau de premier liquide (28) et une deuxième extrémité ouverte (22) située à l'extérieur du récipient fermé (12) et en dessous de l'orifice de décharge d'ajutage (16), de placement du récipient fermé (12) au-dessus du niveau de deuxième liquide (32), et de montée et descente du niveau de deuxième liquide (32) par rapport à la deuxième extrémité ouverte (22) du tube de détection (18) de telle sorte que la deuxième extrémité ouverte (22) soit en dessous du niveau de deuxième liquide (32) durant au moins une partie du cycle de montée et de descente tandis que l'orifice de décharge d'ajutage (16) est toujours au-dessus du niveau de deuxième liquide (32), caractérisé par l'étape de:

dimensionnement de la deuxième extrémité ouverte (22) du tube de détection (18) de telle sorte que la tension de surface du deuxième liquide (32) à l'intérieur de la deuxième extrémité ouverte (22) empêche le passage d'air à travers le tube de détection (18) dans le récipient fermé (12), de manière à dispenser le premier liquide (26) à partir du récipient fermé (12) seulement quand le niveau de deuxième liquide (32) monte.

7. Procédé tel que revendiqué à la revendication 6 dans lequel le premier liquide (26) est déchargé du récipient fermé (12) à travers l'ajutage de distribution (14) quand le niveau de deuxième liquide (32) monte et l'air est aspiré dans le récipient fermé (12) à travers l'ajutage de distribution (14) quand le niveau de deuxième liquide (32) descend.

8. Procédé tel que revendiqué à la revendication 6 ou la revendication 7, dans lequel le premier liquide (26) est dispensé dans le deuxième liquide (32) dans une quantité qui est proportionnelle à la montée du niveau de deuxième liquide (32) au-dessus de la deuxième extrémité ouverte (22) du tube de détection (18).

9. Procédé tel que revendiqué dans l'une quelconque des revendications 6 à 8, dans lequel le premier liquide (26) est distribué dans un deuxième réservoir dans une quantité qui est proportionnelle à la montée du niveau de deuxième liquide (32) au-dessus de la deuxième extrémité ouverte (22) du tube de détection (18), de telle sorte qu'aucun mélange des premier et deuxième liquides (26, 32) ne se produit.

10. Procédé tel que revendiqué dans l'une quelconque des revendications 6 à 9, dans lequel le niveau (32) du deuxième liquide (30) subit des montées et descentes cycliques et le premier liquide (26) est dispensé à un débit généralement constant durant les montées et descentes cycliques et indépendamment du niveau (28) du premier liquide (26) dans le récipient fermé (12).

11. Procédé tel que revendiqué dans l'une quelconque des revendications 6 à 10, dans lequel le premier liquide (26) est dispensé à travers un tuyau de débordement (36) à l'intérieur du premier réservoir (42) et dans un deuxième réservoir sans dilution par le deuxième liquide (32) contenu dans le premier réservoir (42).

## Fig. 1

AIR  P=PA − ΩcHc

## Fig. 2

## Fig. 3

## Fig. 4